(19) Europäisches Patentamt
European Patent Office
Office européen des brevets

(11) **EP 2 722 653 A1**

(12) **EUROPEAN PATENT APPLICATION**

(43) Date of publication:
23.04.2014 Bulletin 2014/17

(51) Int Cl.:
*G01F 1/66* (2006.01)

(21) Application number: 13004927.3

(22) Date of filing: 15.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 16.10.2012 JP 2012229335

(71) Applicant: **HORIBA, LTD.**
**Kyoto-shi,**
**Kyoto 601-8510 (JP)**

(72) Inventor: **Kuriaki, Kazunori**
**Kyoto-shi, Kyoto, 601-8510 (JP)**

(74) Representative: **Müller - Hoffmann & Partner**
**Patentanwälte**
**St.-Martin-Strasse 58**
**81541 München (DE)**

(54) **Ultrasonic flowmeter**

(57) The present invention is one that suppresses crosstalk caused by switching means adapted to switch transmission/reception between ultrasonic transceivers that are paired, and provided with: a first ultrasonic transceiver 2A and a second ultrasonic transceiver 2B; a transmission circuit 3 that generates a transmission signal for vibrating the first ultrasonic transceiver 2A or the second ultrasonic transceiver 2B; a reception circuit 4 that senses a reception signal from the first ultrasonic transceiver 2A or the second ultrasonic transceiver 2B; first transmission amplifying means 7A adapted to amplify the transmission signal to the first ultrasonic transceiver 2A; first reception amplifying means 8A adapted to amplify a reception signal from the first ultrasonic transceiver 2A; second transmission amplifying means 7B adapted to amplify the transmission signal to the second ultrasonic transceiver 2B; and second reception amplifying means 8B adapted to amplify a reception signal from the second ultrasonic transceiver 2B.

FIG.2

## Description

Technical Field

The present invention relates to an ultrasonic flowmeter.

Background Art

As disclosed in Patent Literature 1, a conventional ultrasonic flowmeter has: a first ultrasonic transceiver and a second ultrasonic transceiver that are paired; a transmission circuit that outputs transmission signals to the ultrasonic transceivers; a reception circuit that senses reception signals from the ultrasonic transceivers; and switching means that is adapted to switch transmission/reception between the first ultrasonic transceiver and the second ultrasonic transceiver.

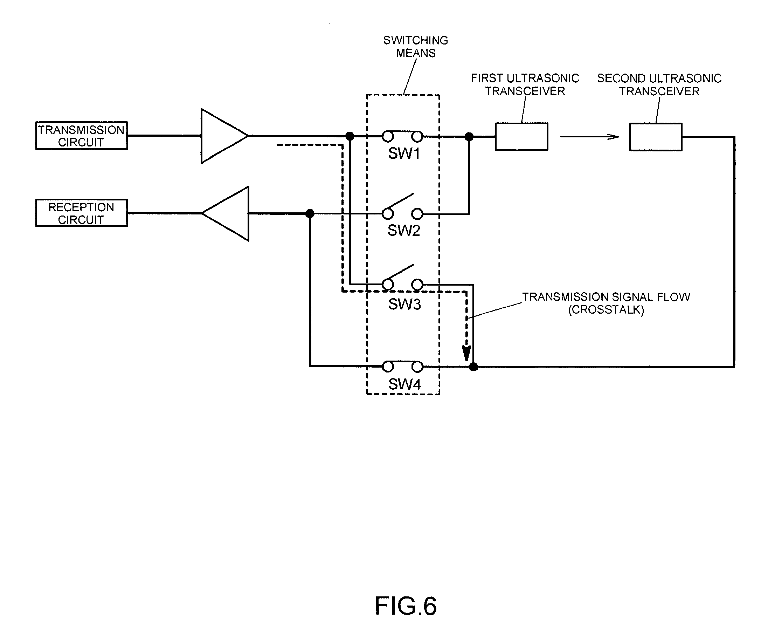

In addition, as illustrated in FIG. 6, the switching means has: a changeover switch SW1 that switches whether or not to output the transmission signal from the transmission circuit to the first ultrasonic transceiver; a changeover switch SW3 that switches whether or not to output the transmission signal to the second ultrasonic transceiver; a changeover switch SW2 that switches whether or not to output the reception signal from the first ultrasonic transceiver to the reception circuit; and a changeover switch S4 that switches whether or not to output the reception signal from the second ultrasonic transceiver to the reception circuit.

However, in the case of, by the switching means having the above configuration, outputting the transmission signal to the first ultrasonic transceiver to set the first ultrasonic transceiver as a transmission side and set the second ultrasonic transceiver as a reception side, there is a problem that the transmission signal from the transmission circuit is transmitted to the second ultrasonic transceiver (crosstalk problem) through the changeover switch SW3 that is cut off, and the second ultrasonic transceiver unnecessarily vibrates before receiving ultrasonic vibration from the first ultrasonic transceiver. In that case, a waveform due to the unnecessary vibration is superimposed on a waveform of the reception signal based on the ultrasonic vibration received by the second ultrasonic transceiver. Also, in the case of reversing the transmission and reception sides, a waveform due to unnecessary vibration is superimposed on a reception waveform based on ultrasonic vibration received by the first ultrasonic transceiver, as well. This causes an error to occur in measurement of a propagation time of ultrasonic vibration, or measurement of a difference in propagation time, which gives rise to a problem of being unable to accurately measure a flow rate.

Citation List

Patent Literature

Patent Literature 1: JP-A2008-14840

Summary of Invention

Technical Problem

Therefore, the present invention is made in order to solve the above-described problems at once, and a main object thereof is to reduce crosstalk, which occurs in switching means adapted to switch transmission/reception between a first ultrasonic transceiver and a second ultrasonic transceiver, and unnecessary vibration due to the crosstalk.

Solution to Problem

That is, an ultrasonic flowmeter according to the present invention is provided with: a first ultrasonic transceiver and a second ultrasonic transceiver that are separately arranged in a flow path through which measuring target fluid flows, and paired; a transmission circuit that generates a transmission signal for driving one of the first ultrasonic transceiver and the second ultrasonic transceiver; a reception circuit that senses a reception signal from the other one of the first ultrasonic transceiver and the second ultrasonic transceiver; first transmission/reception switching means adapted to switch whether to output the transmission signal from the transmission circuit to the first ultrasonic transceiver or to output a reception signal from the first ultrasonic transceiver to the reception circuit; second transmission/reception switching means that is provided separately from the first transmission/reception switching means, and adapted to switch whether to output the transmission signal from the transmission circuit to the second ultrasonic transceiver or to output a reception signal from the second ultrasonic transceiver to the reception circuit; first transmission amplifying means adapted to amplify the transmission signal to the first ultrasonic transceiver; first reception amplifying means adapted to amplify the reception signal from the first ultrasonic transceiver; second transmission amplifying means that is provided separately from the first transmission amplifying means and adapted to amplify the transmission signal to the second ultrasonic transceiver; and second reception amplifying means that is provided separately from the first reception amplifying means and adapted to amplify the reception signal from the second ultrasonic transceiver.

If so, the first transmission/reception switching means adapted to switch between transmission and reception by the first ultrasonic transceiver, and the second transmission/reception switching means adapted to switch between transmission and reception by the second ultrasonic transceiver are separately provided; for the first transmission/reception switching means, the first transmission amplifying means and the first reception amplifying means are provided; and for the second transmission/reception switching means, the second transmission amplifying means and the second reception amplifying means; so that even in the case of outputting the transmission signal to the first ultrasonic transceiver, crosstalk caused by leakage of the transmission signal to the second ultrasonic transceiver, and unnecessary vibration due to the crosstalk can be prevented from occurring. That is, the first ultrasonic transceiver and the second ultrasonic transceiver do not share transmission/reception switching means, transmission amplifying means, or reception amplifying means, but the transmission/reception switching means, the transmission amplifying means, and the reception amplifying means are provided for each of the ultrasonic transceivers, so that the crosstalk and the unnecessary vibration due to the crosstalk can be reduced, and therefore a propagation time of ultrasonic vibration, and a difference in propagation time can be accurately measured to accurately measure a flow rate.

The ultrasonic flowmeter is further provided with: transmission signal switching means adapted to switch a path of the transmission signal outputted from the transmission circuit between toward the first transmission/reception switching means and toward the second transmission/reception switching means; and reception signal switching means adapted to switch a path of the reception signal sensed by the reception circuit between from the first transmission/reception switching means and from the second transmission/reception switching means.

If so, without providing the transmission circuit and the reception circuit for each of the ultrasonic transceivers, the transmission circuit and the reception circuit can be shared by the first ultrasonic transceiver and the second ultrasonic transceiver, and therefore the ultrasonic flowmeter can be downsized.

Desirably, a plurality of sets of a first ultrasonic transceiver and a second ultrasonic transceiver that are pared is provided.

Desirably, among the plurality of sets of a first ultrasonic transceiver and a second ultrasonic transceiver, a plurality of ultrasonic transceivers that are not paired with each other shares the first transmission amplifying means and the first reception amplifying means, or the second transmission amplifying means and the second reception amplifying means.

If so, the plurality of ultrasonic transceivers that are not paired with each other shares transmission amplifying means and reception amplifying means, so that the ultrasonic flowmeter can be downsized, and in particular, in the case where the plurality of sets of ultrasonic transceivers is provided, an effect is made more noticeable.

Desirably, between the first transmission/reception switching means and the second transmission/reception switching means, a shielding member is provided.

If so, in addition to reducing the crosstalk and the unnecessary vibration due to the crosstalk as a circuit configuration, crosstalk caused by the transmission signal propagating in space, and unnecessary vibration due to the crosstalk can also be reduced.

Advantageous Effects of Invention

According to the present invention configured as described, crosstalk occurring in switching means adapted to switch transmission/reception between a first ultrasonic transceiver and a second ultrasonic transceiver, and unnecessary vibration due to the crosstalk can be reduced, and therefore a propagation time of ultrasonic vibration and a difference in propagation time can be accurately measured to accurately measure a flow rate.

Brief Description of Drawings

FIG. 1 is a schematic diagram illustrating the arrangement of ultrasonic transceivers in an ultrasonic flowmeter of the present embodiment;
FIG. 2 is a schematic diagram illustrating a circuit configuration of the ultrasonic flowmeter of the same embodiment;
FIG. 3 is a circuit configuration diagram schematically illustrating a main part of the ultrasonic flowmeter of the same embodiment;
FIG. 4 is a schematic diagram illustrating a waveform of a reception signal in a conventional example, and a waveform of a reception signal of the present invention;
FIG. 5 is a schematic diagram of an ultrasonic flowmeter of a variation; and
FIG. 6 is a circuit configuration diagram schematically illustrating a conventional ultrasonic flowmeter.

Description of Embodiments

In the following, an ultrasonic flowmeter according to the present invention is described with reference to the drawings.

An ultrasonic flowmeter 100 of the present embodiment is one that is used for a gas analysis system for analyzing components contained in measuring target gas such as exhaust gas emitted from an engine or the like, and with being provided in a gas circulation pipe RH through which the measuring target gas flows, measures a flow rate of the measuring target gas flowing through a flow path R of the gas circulation pipe RH.

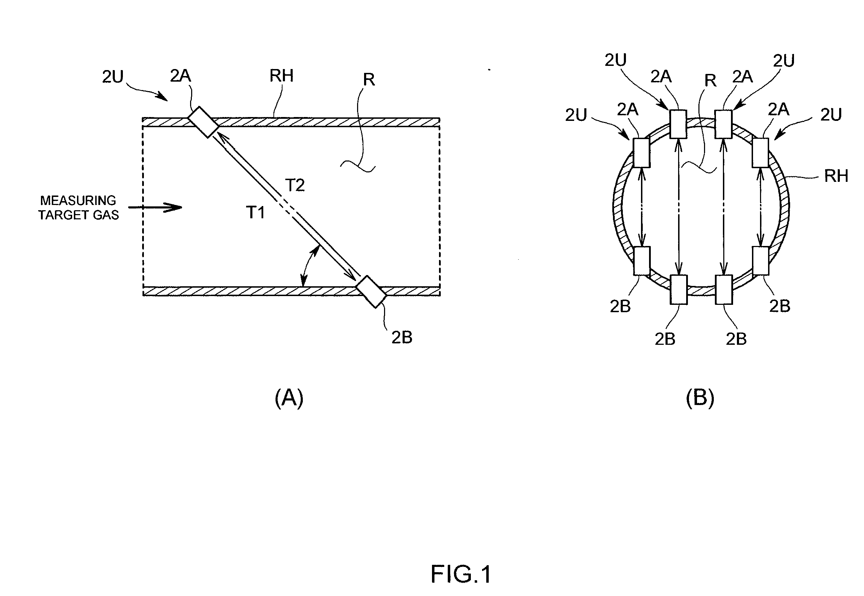

Specifically, as illustrated in FIG. 1(A), the ultrasonic flowmeter 100 has a plurality of sets of a first ultrasonic transceiver 2A and a second ultrasonic transceiver 2B that are obliquely oppositely arranged in the flow path R of the gas circulation pipe RH and paired. In the present embodiment, the first ultrasonic transceiver 2A is provided on an upstream side, and the second ultrasonic transceiver 2B is provided on a downstream side. Also, as illustrated in FIG. 1(B), in the plurality of ultrasonic transceiver sets 2U, the plurality of first ultrasonic transceivers 2A are provided on the same circumference of the gas circulation pipe RH in a flow path direction, whereas the plurality of second ultrasonic transceivers 2B are provided on the same circumference of the gas circulation pipe RH in the flow path direction, and also in a cross-sectional view orthogonal to the flow path direction, the plurality of ultrasonic transceiver sets 2U are arranged at regular intervals in a direction orthogonal to the flow path direction. Note that in FIG. 1(A), the ultrasonic transceivers 2A and 2B are arranged with protruding inward from a pipe wall inner surface of the gas circulation pipe RH; however, an arrangement configuration is not limited to this, and the ultrasonic transceivers 2A and 2B may be arranged at the same level as the pipe wall inner surface or on an outer side of the pipe wall inner surface. Also, in FIG. 1(B), the ultrasonic transceivers 2A and 2B are arranged in upper and lower parts of the gas circulation pipe RH, respectively; however, without limitation to this, the ultrasonic transceivers 2A and 2B may be obliquely arranged, or laterally arranged.

Note that the ultrasonic flowmeter 100 used for the gas analysis system has reduced propagation efficiency because its measuring target is gas, as compared with a flowmeter for measuring liquid or solid. This is because there is a large difference in acoustic impedance between the ultrasonic transceivers and gas propagating an ultrasonic wave, and therefore impedance matching cannot be achieved, which increases reflection at a boundary surface. In the case where driving efficiency for converting electricity to an ultrasonic wave is low, disturbance (such as an influence of an ultrasonic wave other than that for measurement) is easily received, and therefore even in the case where reception efficiency for converting an ultrasonic wave to electricity is low, disturbance (such as electrical noise) is easily received to reduce S/N. For this reason, the present embodiment is configured to use piezoelectric elements having a high electromechanical coupling factor leading to high driving efficiency and reception efficiency for piezoelectric elements of the ultrasonic transceivers 2A and 2B, and thereby cancel out the reduction in propagation efficiency. However, the piezoelectric element having a high electromechanical coupling factor has a tendency for vibration to be unlikely to converge, and is easily influenced by unnecessary vibration due to crosstalk.

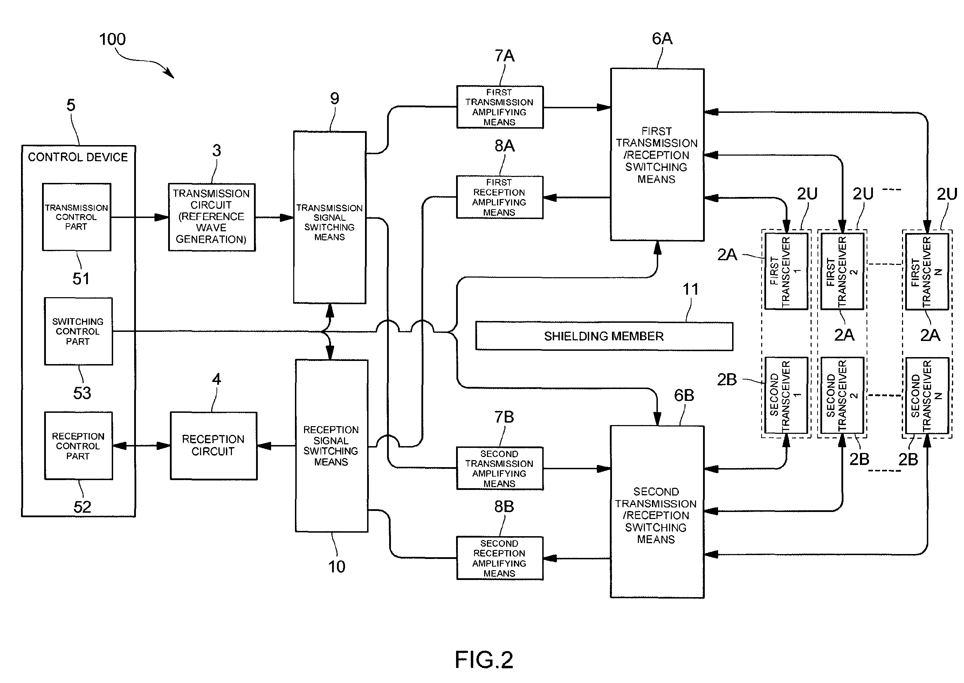

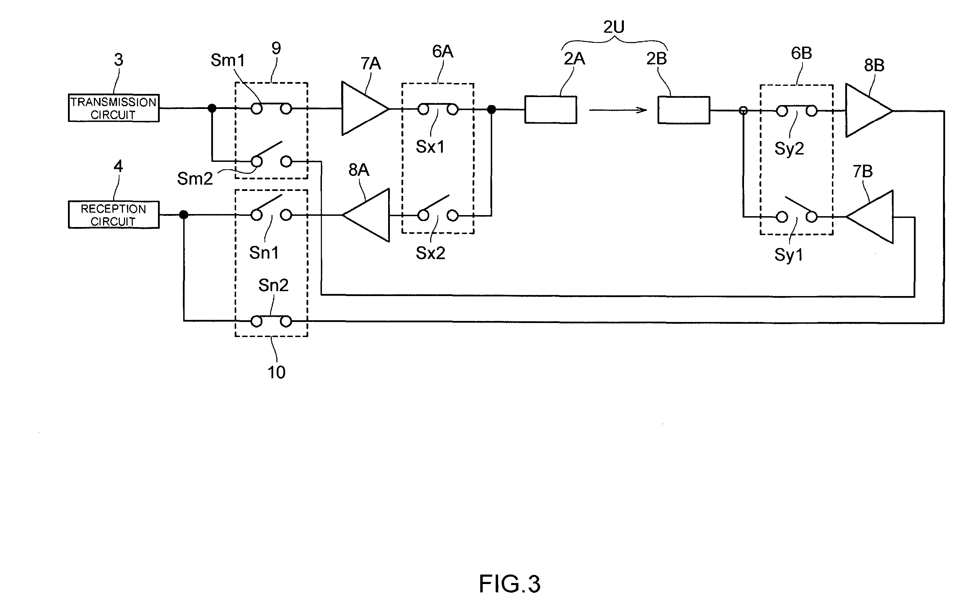

Also, the ultrasonic flowmeter 100 is, as illustrated in FIGS. 2 and 3, provided with: a transmission circuit 3 that generates a transmission signal for driving one of first and second ultrasonic transceivers 2A and 2B; a reception circuit 4 that senses a reception signal from the other one of the first and second ultrasonic transceivers 2A and 2B; a transmission control part 51 that inputs a transmission control signal to the transmission circuit 3; and a reception control part 52 that outputs a reception control signal to the reception circuit 4 and also obtains the reception signal from the reception circuit 4.

The transmission circuit 3 is an ultrasonic pulse generation circuit that obtains the transmission control signal from the transmission control part 51 to generate a reference wave serving as a reference for an ultrasonic pulse. In addition, the reference wave is, for example, pulsed voltage of ±1 V

The reception circuit 4 is one that receives the reception signal generated by the ultrasonic pulse received by the reception side ultrasonic transceiver 2A or 2B, and outputs an analog signal to the reception control part 52.

Calculations of flow velocity V and the flow rate Q in the ultrasonic flowmeter 100 are made by an aftermentioned control device 5 with use of transmission timing of the transmission signal from the transmission circuit 3 and reception timing of the reception signal from the reception circuit 4. Specifically, the control device 5 measures a time T from the output of the ultrasonic pulse from the one ultrasonic transceiver 2A or 2B to the reception of the ultrasonic pulse by the other ultrasonic transceiver 2A or 2B paired with the one ultrasonic transceiver 2A or 2B while switching transmission/reception between the ultrasonic transceivers 2A and 2B, and obtains the flow velocity V and the flow rate Q according to the following expressions.

In addition, in the following expression, θ is an angle formed between an ultrasonic propagation axis connecting the respective ultrasonic transceivers 2A and 2B to each other and the flow path R, L is a propagation path length between the ultrasonic transceivers 2A and 2B, T1 is a propagation time from the upstream side ultrasonic transceiver 2A to the downstream side ultrasonic transceiver 2B, T2 is a propagation time from the downstream side ultrasonic transceiver 2B to the upstream side ultrasonic transceiver 2A, and A is a flow path cross-sectional area of the gas circulation pipe RH.

[Expression 1]

$$V = \frac{L}{2\cos\theta}\left(\frac{1}{T1} - \frac{1}{T2}\right)$$
$$Q = V \times A$$

In addition, the ultrasonic flowmeter 100 is provided with: first transmission/reception switching means 6A adapted to switch between transmission and reception by the first ultrasonic transceiver 2A; and second transmission/reception switching means 6B adapted to switch between transmission and reception by the second ultrasonic transceiver, and the first transmission/reception switching means 6A is correspondingly provided with: first transmission amplifying means 7A adapted to amplify a transmission signal to the first ultrasonic transceiver 2A; and first reception amplifying means 8A adapted to amplify a reception signal from the first ultrasonic transceiver 2A, whereas the second transmission/reception switching means 6B is correspondingly provided with: second transmission amplifying means 7B adapted to amplify a transmission signal to the second ultrasonic transceiver 2B; and second reception amplifying means 8B adapted to amplify a reception signal from the second ultrasonic transceiver 2B.

Each of the first and second transmission amplifying means 7A and 7B is an amplifier that amplifies the transmission signal (reference wave) generated by the transmission circuit 3. In the present embodiment, the amplifier is configured to amplify the pulsed voltage of ±1 V generated by the transmission circuit 3 to the transmission signal having ±100 V. Also, each of the first and second reception amplifying means 8A and 8B is an amplifier that amplifies the reception signal from the first or second ultrasonic transceiver 2A or 2B. Further, the transmission amplifying means 7A and 7B, and the reception amplifying means 8A and 8B are provided in transmission paths and reception path on the transmission circuit 3 sides of the transmission/reception switching means 6A and 6B and on the reception circuit 4 sides of the transmission/reception switching means 6A and 6B, respectively.

The first transmission amplifying means 7A and first reception amplifying means 8A, and the second transmission amplifying means 7B and second reception amplifying means 8B are, in the plurality of ultrasonic transceiver sets 2U, shared by pluralities of ultrasonic transceivers 2A and 2B that are not paired with each other. In the present embodiment, in the plurality of ultrasonic transceiver sets 2U, the plurality of first ultrasonic transceivers 2A shares the one first transmission amplifying means 7A and the one first reception amplifying means 8A, whereas the plurality of second ultrasonic transceivers 2B shares the one second transmission amplifying means 7B and the one second reception amplifying means 8B. Note that the present invention may be adapted such that as long as ultrasonic transceivers 2A and 2B that are not paired with each other, the first ultrasonic transceiver 2A and the second ultrasonic transceiver 2B share transmission amplifying means and reception amplifying means.

As described, the pluralities of ultrasonic transceivers that are not paired with each other, i.e., in the present embodiment, the plurality of first ultrasonic transceivers 2A share the one first transmission amplifying means 7A and the one first reception amplifying means 8A, whereas the plurality of second ultrasonic transceivers 2B share the one second transmission amplifying means 7B and the one second reception amplifying means 8B, and a first ultrasonic transceiver 2A and a second ultrasonic transceiver 2B that are paired respectively use different sets of transmission amplifying means and reception amplifying means, so that in the case of outputting the transmission signal from one ultrasonic transceiver, crosstalk occurring in the other ultrasonic transceiver paired with the one ultrasonic transceiver, and unnecessary vibration due to the crosstalk can be resolved.

Also, the plurality of first ultrasonic transceivers 2A share the one first transmission amplifying means 7A and the one first reception amplifying means 8A, whereas the plurality of second ultrasonic transceivers 2B share the one second transmission amplifying means 7B and the one second reception amplifying means 8B, so that between the plurality of first ultrasonic transceivers 2A ("first transceiver 1" to "first transceiver N" in FIG. 2) sharing the first transmission amplifying means 7A, and between the plurality of second ultrasonic transceivers 2B ("second transceiver 1" to "second transceiver N" in FIG. 2) sharing the second transmission amplifying means 7B, crosstalk and unnecessary vibration due to the crosstalk may occur. However, by setting transmission timings of the transmission signals (ultrasonic pulses) by the plurality of first ultrasonic transceivers 2A or the plurality of second ultrasonic transceivers 2B to transmission timings set at regular time intervals, an influence of the unnecessary vibration due to the crosstalk caused by the first transmission/reception switching means 6A or the second transmission/reception switching means 6B can be reduced. For example, in the case of outputting the transmission signals in the order of "first transceiver 1" → "first transceiver 2" → ... → "first transceiver N", the output of the transmission signal from the "first transceiver 1" causes the unnecessary vibration due to the crosstalk in the "first transceiver 2" and/or the like; however, by setting timing when the transmission signal is outputted from the "first transceiver 2" to timing after a time interval during which the unnecessary vibration attenuates to the extent of not influencing propagation time measurement, the influence of the unnecessary vibration due to the crosstalk on propagation time measurement using the "first transceiver 2" can be reduced. As described, even in the case of sharing transmission amplifying means and reception amplifying means, influences of crosstalk caused by sharing them, and unnecessary vibration due to the crosstalk on the propagation time measurement can be reduced. In addition, between a first ultrasonic transceiver 2A and a second ultrasonic transceiver 2B that are paired, crosstalk and unnecessary vibration due to the crosstalk are reduced, and therefore the transmission timings may be set in the order of "first transceiver 1" → "second transceiver 1" → "first transceiver 2" → "second transceiver 2" → ..., or the transmission timings may be set in the order of "first transceiver 1" → "second transceiver 2" → "first transceiver 2" → "second transceiver 1" → ....

The first transmission/reception switching means 6A is one having opening/closing switches that switch whether to output the transmission signal from the transmission circuit 3 to a first ultrasonic transceiver 2A, or to output the reception signal from the first ultrasonic transceiver 2A to the reception circuit 4. Specifically, as illustrated in FIG. 3, the first transmission/reception switching means 6A has: a transmission side opening/closing switch Sx1 that opens/closes a transmission path between the first transmission amplifying means 7A and each of the first ultrasonic transceivers 2A; and a reception side opening/closing switch Sx2 that opens/closes a reception path between the first reception amplifying means 8A and the first ultrasonic transceiver 2A. In addition, these opening/closing switches Sx1 and Sx2 are controlled by an after-mentioned switching control part 53.

The present embodiment has the plurality of ultrasonic transceiver sets 2U, so that a plurality of transmission side opening/closing switches Sx1 is provided in the first transmission/reception switching means 6A, and a transmission path between the first transmission amplifying means 7A and any one of the plurality of first ultrasonic transceivers 2A is enables, or a reception path between a first ultrasonic transceiver 2A corresponding to a second ultrasonic transceiver 2B connected by an after-mentioned transmission side opening/closing switch Sy1 of the second transmission/reception switching means 6B and the first reception amplifying means 8A is enabled.

The second transmission/reception switching means 6B is provided separately from the first transmission/reception switching means 6A, and one having opening/closing switches that switch whether to output the transmission signal from the transmission circuit 3 to a second ultrasonic transceiver 2B, or to output the reception signal from the second ultrasonic transceiver 2B to the reception circuit 4. Specifically, as illustrated in FIG. 3, the second transmission/reception switching means 6B has: the transmission side opening/closing switch Sy1 that opens/closes a transmission path between the second transmission amplifying means 7B and each of the second ultrasonic transceivers 2B; and a reception side opening/closing switch Sy2 that opens/closes a reception path between the second reception amplifying means 8B and the second ultrasonic transceiver 2B. In addition, these opening/closing switches Sy1 and Sy2 are controlled by the after-mentioned switching control part 53.

The present embodiment has the plurality of ultrasonic transceiver sets 2U, so that a plurality of transmission side opening/closing switches Sy1 is provided in the second transmission/reception switching means 6B, and a transmission path between the second transmission amplifying means 7B and any one of the plurality of second ultrasonic transceivers 2B is enabled, or a reception path between a second ultrasonic transceiver 2B corresponding to a first ultrasonic transceiver 2A connected by the transmission side opening/closing switch Sx1 of the first transmission/reception switching means 6A and the second reception amplifying means 8B is enabled.

The switching control part 53 is, together with the transmission control part 51 and the reception control part 52, included in the dedicated or general-purpose control device 5 that is configured to have a CPU, DSP, FPGA, memory, input/output interface, AD converter, and the like. Also, the switching control part 53 is one that, on the basis of a predetermined measurement sequence, sequentially switches among the ultrasonic transceiver sets 2U as well as switching transmission/reception between a first ultrasonic transceiver 2A and a second ultrasonic transceiver 2B in each of the ultrasonic transceiver sets 2U.

For example, in the case of controlling the first transmission/reception switching means 6A to select a "first ultrasonic transceiver 2A of an Nth set", and switching the "first ultrasonic transceiver 2A of the Nth set to the "transmission side"", the switching control part 53 controls the second transmission/reception switching means 6B to select a "second ultrasonic transceiver 2B of the Nth set" corresponding to the first ultrasonic transceiver 2A selected by the first transmission/reception switching means 6A, and switches the "second ultrasonic transceiver 2B of the Nth set to the "reception side"". Alternatively, in the case of controlling the second transmission/reception switching means 6B to select the "second ultrasonic transceiver 2B of the Nth set", and switching the "second ultrasonic transceiver 2B of the Nth set to the "transmission side"", the switching control part 53 controls the first transmission/reception switching means 6A to select the "first ultrasonic transceiver 2A of the Nth set" corresponding to the second ultrasonic transceiver 2B selected by the second transmission/reception switching means 6B, and switches the "first ultrasonic transceiver 2A of the Nth set to the "reception side"".

Also, in transmission paths between the transmission circuit 3 and the first and second transmission amplifying means 7A and 7B, transmission signal switching means 9 adapted to switch the transmission signal outputted from the transmission circuit 3 between toward the first transmission/reception switching means 6A and toward the second transmission/reception switching means 6B is provided. The present embodiment is configured such that transmission paths to the first ultrasonic transceivers 2A and transmission paths to the second ultrasonic transceivers 2B in the plurality of ultrasonic transceiver sets 2U are separated from each other by the transmission signal switching means 9.

The transmission signal switching means 9 is, as illustrated in FIG. 3, one having opening/closing switches that switch amplifying means adapted to output the transmission signal from the transmission circuit 3 to the first transmission amplifying means 7A or the second transmission amplifying means 7B. Specifically, the transmission signal switching means 9 has: a first transmission opening/closing switch Sm1 that opens/closes a transmission path between the transmission circuit 3 and the first transmission amplifying means 7A; and a second transmission opening/closing switch Sm2 that opens/closes a transmission path between the transmission circuit 3 and the second transmission amplifying means 7B.

In addition, these opening/closing switches Sm1 and Sm2 are controlled by the switching control part 53. Specifically, in the case of controlling the first transmission/reception switching means 6A to switch the "first ultrasonic transceiver 2A of the Nth set to the "transmission side", the switching control part 53 controls the transmission signal switching means 9 to enable the transmission path between the transmission circuit 3 and the first transmission amplifying means 7A. On the other hand, in the case of controlling the second transmission/reception switching means 6B to switch the "second ultrasonic transceiver 2B of the Nth set to the "transmission side", the switching control part 53 controls the transmission signal switching means 9 to enable the transmission path between the transmission circuit 3 and the second transmission amplifying means 7B.

Further, in reception paths between the reception circuit 4 and the first and second reception amplifying means 8A and 8B, reception signal switching means 10 adapted to switch the reception signal sensed by the reception circuit 4 between from the first transmission/reception switching means 6A and from the second transmission/reception switching means 6B is provided. The present embodiment is configured such that reception paths from the first ultrasonic transceivers 2A and reception paths from the second ultrasonic transceivers 2B in the plurality of ultrasonic transceiver sets 2U are separated from each other by the reception signal switching means 10.

The reception signal switching means 10 is, as illustrated in FIG. 3, one having opening/closing switches that switch amplifying means adapted to output the reception signal sensed by the reception circuit 4 to the first reception amplifying means 8A or the second reception amplifying means 8B. Specifically, the reception signal switching means 10 has: a first reception opening/closing switch Sn1 that opens/closes a reception path between the first reception amplifying means 8A and the reception circuit 4; and a second reception opening/closing switch Sn2 that opens/closes a reception path between the second reception amplifying means 8B and the reception circuit 4.

In addition, these opening/closing switches Sn1 and Sn2 are controlled by the switching control part 53. Specifically, in the case of controlling the first transmission/reception switching means 6A to switch the "first ultrasonic transceiver 2A of the Nth set to the "reception side"", the switching control part 53 controls the reception signal switching means 10 to enable the reception path between the first reception amplifying means 8A and the reception circuit 4". On the other hand, in the case of controlling the second transmission/reception switching means 6B to switch the "second ultrasonic transceiver 2B of the Nth set to the "reception side"", the switching control part 53 controls the reception signal switching means 10 to enable the reception path between the second reception amplifying means 8B and the reception circuit 4.

In addition, in the ultrasonic flowmeter 100 of the present embodiment, a set of the first transmission/reception switching means 6A, the first transmission amplifying means 7A, and the first reception amplifying means 8A, and a set of the second transmission/reception switching means 6B, the second transmission amplifying means 7B, and the second reception amplifying means 8B are physically separately provided, and in a space between the sets, a shielding member 11 formed of, for example, a metal plate or the like is provided. The shielding member 11 can reduce crosstalk caused by the transmission signal propagating in the space, and unnecessary vibration due to the crosstalk.

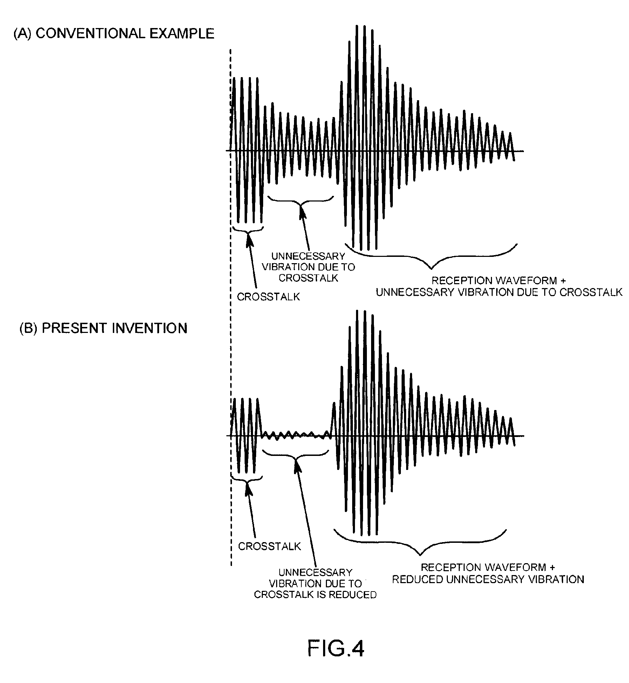

According to the ultrasonic flowmeter 100 according to the present embodiment configured as described, the first ultrasonic transceivers 2A and the second ultrasonic transceivers 2B do not share transmission/reception means, transmission amplifying means, or reception amplifying means, but the transmission/reception switching means 6A and 6B, the transmission amplifying means 7A and 7B, and the reception amplifying means 8A and 8B are respectively provided for the first ultrasonic transceivers 2A and the second ultrasonic transceivers 2B, so that as illustrated in FIG. 4, even in the case of outputting the transmission signal to a first ultrasonic transceiver 2A, crosstalk caused by leakage of the transmission signal to a second ultrasonic transceiver 2B, and unnecessary vibration due to the crosstalk can be reduced, and therefore the propagation times T1 and T2 of the ultrasonic pulses can be accurately measured to accurately measure the flow rate Q. In particular, in the case of, in the ultrasonic flowmeter 100 measuring the flow rate of the measuring target gas, as the piezoelectric elements, using ones having a large electromechanical coupling factor, an effect of reducing the crosstalk and the unnecessary vibration due to the crosstalk can be further made noticeable.

Also, in the ultrasonic flowmeter 100 having the plurality of sets of a first ultrasonic transceiver 2A and a second ultrasonic transceiver 2B, the first transmission/reception switching means 6A is one that switches, among the plurality of first ultrasonic transceivers 2A, a first ultrasonic transceiver 2A performing transmission/reception, whereas the second transmission/reception switching means 6B is one that switches, among the plurality of second ultrasonic transceivers 2B, a second ultrasonic transceiver 2B performing transmission/reception, and therefore the plurality of first ultrasonic transceivers 2A can share the first transmission amplifying means 7A and the first reception amplifying means 8A, whereas the plurality of second ultrasonic transceivers 2B can share the second transmission amplifying means 7B and the second reception amplifying means 8B. This enables the ultrasonic flowmeter 100 to be downsized.

Note that the present invention is not limited to the above-described embodiment.

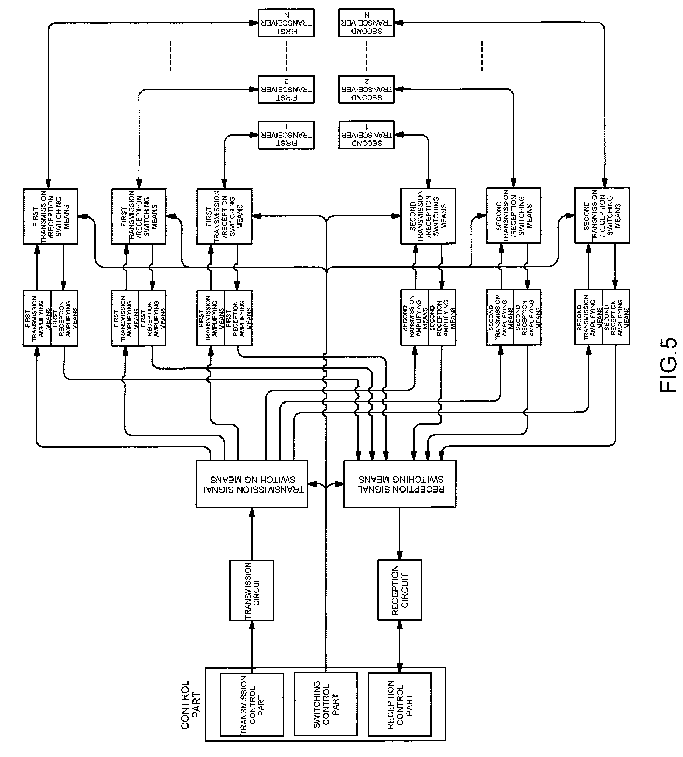

For example, in the above-described embodiment, the first transmission/reception switching means 6A, the first transmission amplifying means 7A, and the first reception amplifying means 8A are shared by the plurality of first ultrasonic transceivers 2A, and the second transmission/reception switching means 6B, the second transmission amplifying means 7B, and the second reception amplifying means 8B are shared by the plurality of second ultrasonic transceivers 2B; however, as illustrated in FIG. 5, the present invention may be adapted to be one in which for each of the first ultrasonic transceivers 2A, first transmission/reception switching means 6A, first transmission amplifying means 7A, and first reception amplifying means 8A are provided, and for each of the second ultrasonic transceivers 2B, second transmission/reception switching means 6B, second transmission amplifying means 7B, and second reception amplifying means 8B are provided.

Alternatively, the present invention may be adapted to be one in which the first transmission/reception switching means 6A is shared by the plurality of first ultrasonic transceivers 2A, and for each of the first ultrasonic transceivers 2A, first transmission amplifying means 7A and first reception amplifying means 8A are provided, whereas the second transmission/reception switching means 6B is shared by the plurality of second ultrasonic transceivers 2B, and for each of the second ultrasonic transceivers 2B, second transmission amplifying means 7B and second reception amplifying means 8B are provided.

In addition, in place of each of the opening/closing switches Sx1 and Sx2 of the first transmission/reception switching means 6A, and the opening/closing switches Sy1 and Sy2 of the second transmission/reception switching means 6B, in order to further reduce the crosstalk and the unnecessary vibration due to the crosstalk, an insulating circuit such as a T type switch using a reed relay, photo MOS relay, or the like may be used.

Further, by using an insulating circuit that short-circuits input to an amplifier at the time of switch OFF in place of each of the opening/closing switches Sm1 and Sm2 of the transmission signal switching means 9, and the like, the crosstalk and the unnecessary vibration due to the crosstalk can be further reduced.

Besides, it should be appreciated that the present invention is not limited to any of the above-described embodiments, but can be variously modified without departing from the scope thereof.

Reference Signs List

| | |
|---|---|
| 100: | Ultrasonic flowmeter |
| R: | Flow path |
| 2U: | Ultrasonic transceiver set |
| 2A: | First ultrasonic transceiver |
| 2B: | Second ultrasonic transceiver |
| 3: | Transmission circuit |
| 4: | Reception circuit |
| 5: | Control device |
| 51: | Transmission control part |
| 52: | Reception control part |
| 53: | Switching control part |
| 6A: | First transmission/reception switching means |
| 6B: | Second transmission/reception switching means |
| 7A: | First transmission amplifying means |
| 7B: | Second transmission amplifying means |
| 8A: | First reception amplifying means |
| 8B: | Second reception amplifying means |
| 9: | Transmission signal switching means |
| 10: | Reception signal switching means |
| 11: | Shielding member |

**Claims**

1. An ultrasonic flowmeter comprising:

a first ultrasonic transceiver and a second ultrasonic transceiver that are separately arranged in a flow path through which measuring target fluid flows, and paired;
a transmission circuit that generates a transmission signal for driving one of the first ultrasonic transceiver and the second ultrasonic transceiver;
a reception circuit that senses a reception signal from the other one of the first ultrasonic transceiver and the second ultrasonic transceiver;
first transmission/reception switching means adapted to switch whether to output the transmission signal from the transmission circuit to the first ultrasonic transceiver or to output a reception signal from the first ultrasonic transceiver to the reception circuit;

second transmission/reception switching means that is provided separately from the first transmission/reception switching means, and adapted to switch whether to output the transmission signal from the transmission circuit to the second ultrasonic transceiver or to output a reception signal from the second ultrasonic transceiver to the reception circuit;

first transmission amplifying means adapted to amplify the transmission signal to the first ultrasonic transceiver;

first reception amplifying means adapted to amplify the reception signal from the first ultrasonic transceiver;

second transmission amplifying means that is provided separately from the first transmission amplifying means and adapted to amplify the transmission signal to the second ultrasonic transceiver; and

second reception amplifying means that is provided separately from the first reception amplifying means and adapted to amplify the reception signal from the second ultrasonic transceiver.

2. The ultrasonic flowmeter according to claim 1, further comprising:

transmission signal switching means adapted to switch a path of the transmission signal outputted from the transmission circuit between toward the first transmission/reception switching means and toward the second transmission/reception switching means; and

reception signal switching means adapted to switch a path of the reception signal sensed by the reception circuit between from the first transmission/reception switching means and from the second transmission/reception switching means.

3. The ultrasonic flowmeter according to claim 1, wherein

a plurality of sets of a first ultrasonic transceiver and a second ultrasonic transceiver that are pared is provided.

4. The ultrasonic flowmeter according to claim 3, wherein

among the plurality of sets of a first ultrasonic transceiver and a second ultrasonic transceiver, a plurality of ultrasonic transceivers that are not paired with each other shares the first transmission amplifying means and the first reception amplifying means, or the second transmission amplifying means and the second reception amplifying means.

5. The ultrasonic flowmeter according to claim 1, wherein

between the first transmission/reception switching means and the second transmission/reception switching means, a shielding member is provided.

(A)                                    (B)

FIG.1

EP 2 722 653 A1

FIG.2

FIG.3

EP 2 722 653 A1

(A) CONVENTIONAL EXAMPLE

UNNECESSARY
VIBRATION DUE TO
CROSSTALK

CROSSTALK

RECEPTION WAVEFORM +
UNNECESSARY VIBRATION DUE TO CROSSTALK

(B) PRESENT INVENTION

CROSSTALK

UNNECESSARY
VIBRATION DUE TO
CROSSTALK IS REDUCED

RECEPTION WAVEFORM +
REDUCED UNNECESSARY VIBRATION

FIG.4

FIG.5

FIG.6

EP 2 722 653 A1

Europäisches Patentamt
European Patent Office
Office européen des brevets

# EUROPEAN SEARCH REPORT

Application Number

EP 13 00 4927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 3 336 801 A (SNAVELY BENJAMIN L) 22 August 1967 (1967-08-22) * figures 4,5 * * column 1, line 10 - column 6, line 14 * ----- | 1-5 | INV. G01F1/66 |
| Y | EP 0 537 735 A2 (ORE INTERNATIONAL INC [US] ORE INTERNATIONAL INC [BE] ORE INTERNAT INC) 21 April 1993 (1993-04-21) * abstract; figures 4, 5A * * column 3, line 36 - column 6, line 11 * ----- | 1-5 | |
| A | DE 43 22 849 C1 (SICK OPTIK ELEKTRONIK ERWIN [DE]) 8 December 1994 (1994-12-08) * abstract; figure 2 * * column 6, line 5 - line 47 * ----- | 1-5 | |
| A | GB 1 554 564 A (WESTINGHOUSE ELECTRIC CORP) 24 October 1979 (1979-10-24) * page 2, line 54 - page 3, line 9 * * page 5, line 8 - line 46; figures 1,5 * ----- | 1-5 | |
| A | US 2006/278016 A1 (FROEHLICH THOMAS [CH] ET AL) 14 December 2006 (2006-12-14) * abstract; figure 2 * ----- | 1-5 | TECHNICAL FIELDS SEARCHED (IPC) G01F |

The present search report has been drawn up for all claims

| Place of search | Date of completion of the search | Examiner |
|---|---|---|
| Munich | 6 March 2014 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 13 00 4927

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2014

| Patent document cited in search report | | Publication date | Patent family member(s) | | Publication date |
|---|---|---|---|---|---|
| US 3336801 | A | 22-08-1967 | NONE | | |
| EP 0537735 | A2 | 21-04-1993 | AT | 246344 T | 15-08-2003 |
| | | | DE | 69233140 D1 | 04-09-2003 |
| | | | DE | 69233140 T2 | 27-05-2004 |
| | | | EP | 0537735 A2 | 21-04-1993 |
| | | | US | 5228347 A | 20-07-1993 |
| DE 4322849 | C1 | 08-12-1994 | NONE | | |
| GB 1554564 | A | 24-10-1979 | CA | 1050153 A1 | 06-03-1979 |
| | | | CH | 611020 A5 | 15-05-1979 |
| | | | DE | 2633003 A1 | 24-02-1977 |
| | | | FR | 2331002 A1 | 03-06-1977 |
| | | | GB | 1554564 A | 24-10-1979 |
| | | | JP | S5216261 A | 07-02-1977 |
| | | | JP | S5948327 B2 | 26-11-1984 |
| | | | NL | 7607054 A | 27-01-1977 |
| | | | US | 4024760 A | 24-05-1977 |
| US 2006278016 | A1 | 14-12-2006 | DE | 102005022048 A1 | 16-11-2006 |
| | | | EP | 1722221 A2 | 15-11-2006 |
| | | | US | 2006278016 A1 | 14-12-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 00814840 A